# EUROPEAN PATENT APPLICATION

(11) **EP 3 428 842 A1**
(43) Date of publication of application: **16.01.2019**
(21) Application number: 18179353.0
(22) Date of filing: 22.06.2018
(51) Int. Cl.: G06K 9/00, G06K 9/46, G06K 9/62

(54) **IMPROVEMENTS RELATING TO EXTRACTION OF DOCUMENT PICTURES FROM IMAGES**

(30) Priority: 13.07.2017 GB 201711310
(71) Applicant: GB Group plc, London E14 9QD (GB)
(72) Inventor: Alitto, M Moneer, London, E14 9QD (GB)
(74) Representative: Armstrong, Rosemary

(57) **Abstract**

A method of extracting a picture of a document from an image of the document is provided, comprising capturing an image of the document, detecting a representation of the document in the captured image, calculating a first transformation for de-warping of the representation of the document in the captured image, applying the first transformation to the representation of the document in the captured image to produce a de-warped representation of the document, obtaining a type of the document and a reference picture of a document of the same type, calculating a second transformation for mapping the reference picture to the de-warped representation of the document, applying the second transformation to a plurality of corner point locations of the reference picture to produce a plurality of expected corner point locations of the de-warped representation of the document, applying the inverse of the first transformation to the plurality of expected corner point locations of the de-warped representation of the document to produce a plurality of actual corner point locations of the document in the captured image, and using the plurality of actual corner point locations of the document in the captured image to extract a picture of the document from the captured image.

## Description

### Field of the Invention

The invention relates to improvements in the extraction of document pictures from images and particularly to the extraction of pictures of documents used in identification processes, e.g. passports and utility bills.

### Background to the Invention

Extraction of document pictures from images is a task required in a number of areas, for example in areas where identification of the owner of a document is needed. To extract a picture of a document from an image, it is usually necessary to first detect the document picture within the image. There are, however, a number of sources of inaccuracy in the detection of document pictures, for example the detection technique may have limitations. Document detection inaccuracies can also be introduced in the capture of the image, for example when an image is captured which comprises a very skewed picture of a document, or an object, e.g. a finger, is overlaid onto the document. The complexity of a document and also its background can also introduce inaccuracies in document detection in an image. These inaccuracies may result in difficulties in extraction of a document picture from an image, for example only part of a document picture may be extracted.

### Summary of the Invention

According to a first aspect of the invention there is provided a method of extracting a picture of a document from an image of the document, comprising:
(i) capturing an image of the document,
(ii) detecting a representation of the document in the captured image,
(iii) calculating a first transformation for de-warping of the representation of the document,
(iv) applying the first transformation to the representation of the document to produce a de-warped representation of the document,
(v) obtaining a type of the document and a reference picture of a document of the same type,
(vi) calculating a second transformation for mapping the reference picture to the de-warped representation of the document,
(vii) applying the second transformation to a plurality of corner point locations of the reference picture to produce a plurality of expected corner point locations of the de-warped representation of the document,
(viii) applying the inverse of the first transformation to the plurality of expected corner point locations of the de-warped representation of the document to produce a plurality of actual corner point locations of the document in the captured image, and
(ix) using the plurality of actual corner point locations of the document in the captured image to extract a picture of the document from the captured image.

To extract a picture of a document from an image, the document in the image needs to be detected. The detected document may be only a representation of the actual document, for example the detected representation of the document may comprise only a part of the actual document in the image. This may be due to inaccuracies of detection methods used or inaccuracies introduced during capturing of the image by an image capture device. For example the image of the document may be heavily warped, particularly rotated out of the capture plane of the capture device, or an object, such as a finger, may overlay part of the document. It is desirable to extract an actual document picture from the image, or as close to this as possible. The invention achieves this by using the detected representation of the document and comparing this to a reference picture of a document of the same type, as described above.

Capturing the image of the document may comprise instructing a user to use an image capture device to capture the image. The image capture device may be a camera. The camera may be provided in a mobile phone. The image capture device may be a video recorder. The video recorder may be provided in a mobile phone. The user may be instructed to place the document in front of the camera or video recorder and to capture the image of the document. The image capture device may be a scanner. Capturing the image of the document may comprise receiving the image from a remote location.

Detecting the representation of the document may comprise detecting a plurality of estimated corner point locations of the document in the captured image. This may carried out manually or by using a known, software-based, detection method.

Calculating the first transformation for de-warping of the representation of the document may comprise using the plurality of estimated corner point locations of the document in the captured image. The first transformation may de-warp the representation of the document by flattening the representation of the document.

Applying the first transformation to the representation of the document may comprise multiplying the first transformation with locations of pixels of the representation of the document to produce locations of corresponding pixels of the de-warped representation of the document. The method may further comprise applying extracted intensities of the pixels of the representation of the document to the corresponding pixels of the de-warped representation of the document. The method may further comprise interpolating intensities of pixels of the representation of the document in the captured image to determine intensities of pixels of the de-warped representation of the document.

Obtaining a type of the document and the reference picture may comprise receiving the type of the document and the reference picture of a document of the same type from a user. Obtaining a type of the document and the reference picture may comprise receiving the type of the document and the reference picture of a document of the same type from a software-based recognition engine.

Calculating the second transformation for mapping the reference picture to the de-warped representation of the document may comprise selecting a plurality of keypoints of the reference picture, calculating descriptors for the keypoints of the reference picture, selecting a plurality of keypoints of the de-warped representation of the document, calculating descriptors for the keypoints of the de-warped representation of the document, using a matching algorithm to match the descriptors of the reference picture and the descriptors of the de-warped representation of the document, and using the keypoints of matched descriptors to determine a homography transformation for mapping the reference picture to the de-warped representation of the document. Selecting the plurality of keypoints of the reference picture and selecting the plurality of keypoints of the de-warped representation of the document may comprise using a good feature to track (GFTT) algorithm. Calculating descriptors for the keypoints of the reference picture and/or calculating descriptors for the keypoints of the de-warped representation of the document may comprise using a scale invariant feature transform (SIFT) algorithm.

Applying the second transformation to a plurality of corner point locations of the reference picture may comprise multiplying the second transformation with locations of the plurality of corner points of the reference picture to produce the plurality of expected corner point locations of the de-warped representation of the document.

Applying the inverse of the first transformation to the plurality of expected corner point locations of the de-warped representation of the document may comprise multiplying the inverse of the first transformation with locations of the plurality of expected corner points of the de-warped representation of the document to produce the plurality of actual corner point locations of the document in the captured image. The method may further comprise applying a further de-warping transformation to the plurality of actual corner point locations of the document in the captured image.

According to a second aspect of the invention there is provided a document picture extraction computer program, tangibly embodied on a non-transitory computer readable medium, the computer program including instructions for causing a computer to execute the method of extracting a picture of a document from an image of the document according to the first aspect of the invention.

According to a third aspect of the invention there is provided a system for extracting a picture of a document from an image of the document comprising:
(i) an image capture device which captures an image of the document,
(ii) a detection module which detects a representation of the document in the captured image,
(iii) a first calculator module which calculates a first transformation for de-warping of the representation of the document,
(iv) a first transform module which applies the first transformation to the representation of the document to produce a de-warped representation of the document,
(v) a reference document module which obtains a type of the document and a reference picture of a document of the same type,
(vi) a second calculator module which calculates a second transformation for mapping the reference picture to the de-warped representation of the document,
(vii) a second transform module which applies the second transformation to a plurality of corner point locations of the reference picture to produce a plurality of expected corner point locations of the de-warped representation of the document,
(viii) a third transform module which applies the inverse of the first transformation to the plurality of expected corner point locations of the de-warped representation of the document to produce a plurality of actual corner point locations of the document in the captured image, and
(ix) an extraction module which uses the plurality of actual corner point locations of the document in the captured image to extract a picture of the document from the captured image.

The image capture device and the modules of the system may be located in one machine. The image capture device and the modules of the system may be located in a mobile phone. Alternatively, the image capture device and the modules of the system may be distributed across one or more machines. The image capture device of the system may be located in any of a camera, a video recorder, a mobile phone, a scanner and the modules of the system may be located in a processing machine which is linked to the image capture device. The link may be any of a wired link, a wireless link, a link via the Internet. The modules of the system may be provided in any of hardware, software, a combination of hardware and software.

### Description of the Invention

Embodiments of the invention will now be described, by way of example only, with reference to the accompanying drawings, in which:
Figure 1 is a flow chart of a method of extracting a picture of a document from an image of the document according to the first aspect of the invention;
Figure 2 is a schematic representation of the method of extracting a picture of a document from an image of the document of Figure 1, and
Figure 3 is a schematic representation of the system for extracting a picture of a document from an image of the document according to the third aspect of the invention.

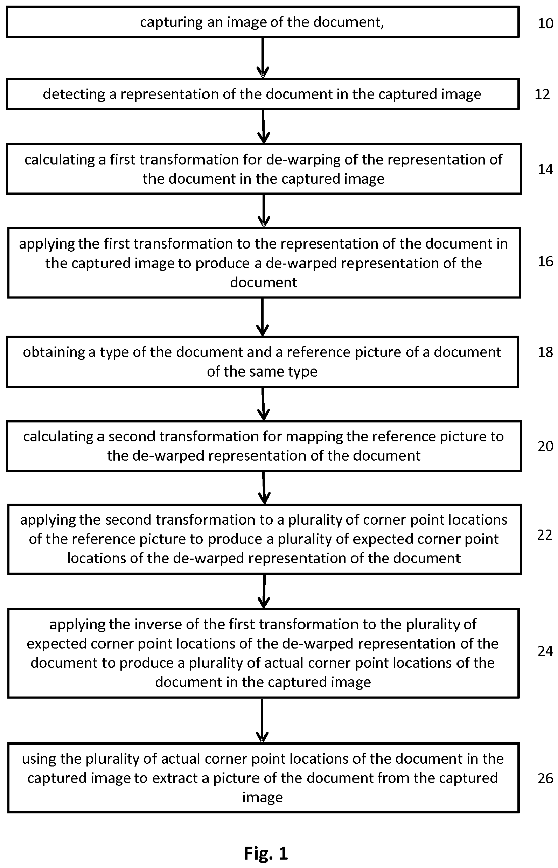

Referring to Figure 1, the method of extracting a picture of a document from an image of the document, comprises the steps of:
(i) capturing an image of the document 10,
(ii) detecting a representation of the document in the captured image 12,
(iii) calculating a first transformation for de-warping of the representation of the document 14,
(iv) applying the first transformation to the representation of the document to produce a de-warped representation of the document 16,
(v) obtaining a type of the document and a reference picture of a document of the same type 18,
(vi) calculating a second transformation for mapping the reference picture to the de-warped representation of the document 20,
(vii) applying the second transformation to a plurality of corner point locations of the reference picture to produce a plurality of expected corner point locations of the de-warped representation of the document 22,
(viii) applying the inverse of the first transformation to the plurality of expected corner point locations of the de-warped representation of the document to produce a plurality of actual corner point locations of the document in the captured image 24, and
(ix) using the plurality of actual corner point locations of the document in the captured image to extract a picture of the document from the captured image 26.

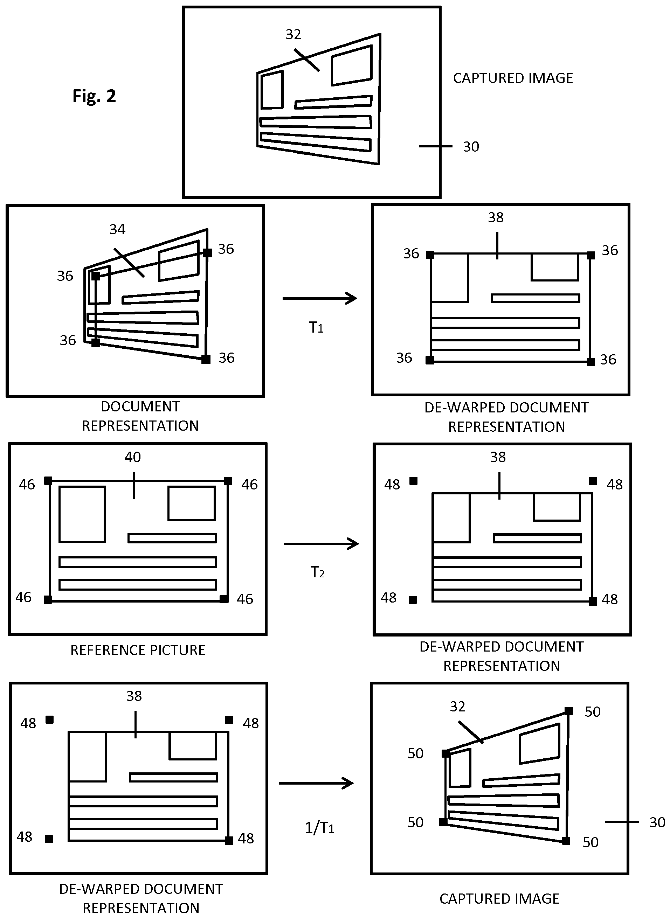

Referring to Figure 1 and Figure 2, in one embodiment, the image 30 of the document 32 is captured using an image capture device comprising a camera in a mobile phone (not shown). A user is instructed how and when to capture the image of the document. It will be appreciated that other image capture devices, such as a video recorder or a scanner, may be used or the image of the document may be received from a remote location. In this example, it will be noted that the document 32 in the captured image 30 is skewed, i.e. rotated out of the capture plane of the capture device. This is due to inaccuracies introduced during capturing of the image 30 by an image capture device.

A representation 34 of the document 32 in the captured image 30 is then detected. This comprises detecting a plurality of estimated corner point locations 36 of the document 32 in the captured image 30. In this embodiment, corner point location is performed using a known, software-based, corner point location detection method, but it will be appreciated that manual selection may be used. In this example, the detected document is only a representation of the actual document, comprising only a part of the actual document in the image. This is due to the inaccuracies introduced during capturing of the image.

A first transformation T₁ is then calculated which de-warps the representation 34 of the document by flattening. The plurality of estimated corner point locations 36 of the document are used for calculating the first transformation T₁.

The first transformation T₁ is applied to the representation 34 of the document to produce a de-warped representation 38 of the document. The first transformation T₁ is applied to the representation 34 of the document by multiplying the first transformation T₁ with locations of pixels of the representation 34 of the document to produce locations of corresponding pixels of the de-warped representation 38 of the document. Extracted intensities of the pixels of the representation 34 of the document are applied to the corresponding pixels of the de-warped representation 38 of the document. This may require interpolating intensities of pixels of the representation 34 of the document to determine intensities of pixels of the de-warped representation 38 of the document.

A reference picture 40 of a document of the same type as the document 32 in the captured image 30 is then obtained. This is achieved by first obtaining, i.e. identifying the type of the document 32 using a software-based recognition engine and obtaining the reference picture 40. It will be appreciated that the type of the document and the reference picture of a document of the same type may alternatively be received from a user.

A second transformation T₂ is then calculated which maps the reference picture 40 to the de-warped representation 38 of the document. The second transformation T₂ is calculated by selecting a plurality of keypoints of the reference picture 40 using a GFTT algorithm, calculating descriptors for the keypoints of the reference picture 40 using a SIFT algorithm, selecting a plurality of keypoints of the de-warped representation 38 of the document using a GFTT algorithm, calculating descriptors for the keypoints of the de-warped representation 38 of the document using a SIFT algorithm, using a matching algorithm to match the descriptors of the reference picture 40 and the descriptors of the de-warped representation 38 of the document, and using the keypoints of the matched descriptors to determine a homography transformation T₂ for mapping the reference picture 40 to the de-warped representation 38 of the document. It will be appreciated that other algorithms may be used for selecting the plurality of keypoints of the reference picture and selecting the plurality of keypoints of the de-warped representation of the document and calculating descriptors for the keypoints of the reference picture and calculating descriptors for the keypoints of the de-warped representation of the document.

The second transformation T₂ is applied to a plurality of corner point locations 46 of the reference picture 40 to produce a plurality of expected corner point locations 48 of the de-warped representation 38 of the document. The second transformation T₂ is multiplied with locations 46 of the plurality of corner points of the reference picture 40 to produce the plurality of expected corner point locations 48 of the de-warped representation 38 of the document.

The inverse of the first transformation T₁⁻¹ is then applied to the plurality of expected corner point locations 48 of the de-warped representation 38 of the document to produce a plurality of actual corner point locations 50 of the document in the captured image. The inverse of the first transformation, T₁⁻¹, is multiplied with locations 48 of the plurality of expected corner points 48 of the de-warped representation 38 of the document to produce the plurality of actual corner point locations 50 of the document 32 in the captured image 30. A further de-warping transformation may be applied to the plurality of actual corner point locations of the document.

The plurality of actual corner point locations 50 of the document 32 in the captured image 30 are then used to extract a picture of the document 32 from the captured image 30.

The method described above may be carried out by a document picture extraction computer program, tangibly embodied on a non-transitory computer readable medium, which includes instructions for causing a computer to execute the method of extracting a picture of a document from an image of the document according to the first aspect of the invention. The document picture extraction computer program is comprised in the system for extracting a picture of a document from an image of the document described below.

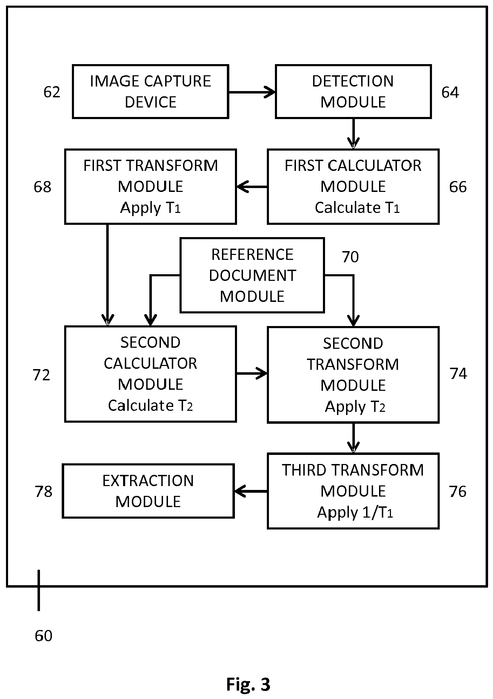

Referring to Figure 3, a system 60 for extracting a picture of a document from an image of the document, using the method and computer program described above, is shown. The system 60 comprises an image capture device 62, a detection module 64, a first calculator module 66, a first transform module 68, a reference document module 70, a second calculator module 72, a second transform module 74, a third transform module 76 and an extraction module 78.

In this embodiment, the image capture device 62 comprises a camera, and the modules of the system are located in one machine comprising a mobile phone. It will be appreciated that the image capture device and the modules of the system may be distributed across one or more machines. The image capture device of the system may be located in any of a camera, a video recorder, a mobile phone, a scanner and the modules of the system may be located in a processing machine which is linked to the image capture device. The link may be any of a wired link, a wireless link, a link via the Internet.

Referring to Figures 2 and 3, the image capture device 62 captures an image 30 of the document 32, which may be a photograph of the document. The detection module 64 detects a representation 34 of the document in the captured image 30. In this embodiment the representation 34 does not comprise a true picture of the document 32 due to skew of the document with respect to the camera 62. This will often be the case when a user of the system 60 captures a document image 30. The first calculator module 66 calculates a first transformation T₁ for de-warping of the representation 34 of the document. The first transform module 68 applies the first transformation T₁ to the representation 34 of the document to produce a de-warped representation 38 of the document. The reference document module 70 obtains a type of the document and a reference picture 40 of a document of the same type. The second calculator module 72 calculates a second transformation T₂ for mapping the reference picture 40 to the de-warped representation 38 of the document. The second transform module 74 applies the second transformation T₂ to a plurality of corner point locations 46 of the reference picture 40 to produce a plurality of expected corner point locations 48 of the de-warped representation 38 of the document. The third transform module 76 applies the inverse of the first transformation T₁⁻¹ to the plurality of expected corner point locations 48 of the de-warped representation 38 of the document to produce a plurality of actual corner point locations 50 of the document in the captured image. The extraction module 78 uses the plurality of actual corner point locations 50 of the document 32 in the captured image 30 to extract a picture of the document from the captured image.

## Claims

1. A method of extracting a picture of a document from an image of the document, comprising:
(i) capturing an image of the document,
(ii) detecting a representation of the document in the captured image,
(iii) calculating a first transformation for de-warping of the representation of the document,
(iv) applying the first transformation to the representation of the document to produce a de-warped representation of the document,
(v) obtaining a type of the document and a reference picture of a document of the same type,
(vi) calculating a second transformation for mapping the reference picture to the de-warped representation of the document,
(vii) applying the second transformation to a plurality of corner point locations of the reference picture to produce a plurality of expected corner point locations of the de-warped representation of the document,
(viii) applying the inverse of the first transformation to the plurality of expected corner point locations of the de-warped representation of the document to produce a plurality of actual corner point locations of the document in the captured image, and
(ix) using the plurality of actual corner point locations of the document in the captured image to extract a picture of the document from the captured image.

2. A method according to claim 1 in which capturing the image of the document comprises instructing a user to use an image capture device to capture the image.

3. A method according to claim 1 or claim 2 in which detecting a representation of the document comprises detecting a plurality of estimated corner point locations of the document in the captured image.

4. A method according to any preceding claim in which calculating the first transformation for de-warping of the representation of the document comprises using a plurality of estimated corner point locations of the document in the captured image.

5. A method according to any preceding claim in which applying the first transformation to the representation of the document comprises multiplying the first transformation with locations of pixels of the representation of the document to produce locations of corresponding pixels of the de-warped representation of the document and applying extracted intensities of the pixels of the representation of the document to the corresponding pixels of the de-warped representation of the document.

6. A method according to any preceding claim in which obtaining a type of the document and the reference picture comprises receiving the type of the document and the reference picture of a document of the same type from a user.

7. A method according to any of claims 1 to 5 in which obtaining a type of the document and the reference picture comprises receiving the type of the document and the reference picture of a document of the same type from a software-based recognition engine.

8. A method according to any preceding claim in which calculating the second transformation for mapping the reference picture to the de-warped representation of the document comprises selecting a plurality of keypoints of the reference picture, calculating descriptors for the keypoints of the reference picture, selecting a plurality of keypoints of the de-warped representation of the document, calculating descriptors for the keypoints of the de-warped representation of the document, using a matching algorithm to match the descriptors of the reference picture and the descriptors of the de-warped representation of the document, and using the keypoints of the matched descriptors to determine a homography transformation for mapping the reference picture to the de-warped representation of the document.

9. A method according to any preceding claim in which applying the second transformation to the plurality of corner point locations of the reference picture comprises multiplying the second transformation with locations of the plurality of corner points of the reference picture to produce the plurality of expected corner point locations of the de-warped representation of the document.

10. A method according to any preceding claim in which applying the inverse of the first transformation to the plurality of expected corner point locations of the de-warped representation of the document comprises multiplying the inverse of the first transformation with locations of the plurality of expected corner points of the de-warped representation of the document to produce the plurality of actual corner point locations of the document in the captured image.

11. A method according to any preceding claim further comprising applying a further de-warping transformation to the plurality of actual corner point locations of the document in the captured image.

12. A document picture extraction computer program, tangibly embodied on a non-transitory computer readable medium, the computer program including instructions for causing a computer to execute the method of extracting a picture of a document from an image of the document according to claims 1 to 11.

13. A system for extracting a picture of a document from an image of the document comprising:
(i) an image capture device which captures an image of the document,
(ii) a detection module which detects a representation of the document in the captured image,
(iii) a first calculator module which calculates a first transformation for de-warping of the representation of the document in the captured image,
(iv) a first transform module which applies the first transformation to the representation of the document in the captured image to produce a de-warped representation of the document,
(v) a reference document module which obtains a type of the document and a reference picture of a document of the same type,
(vi) a second calculator module which calculates a second transformation for mapping the reference picture to the de-warped representation of the document,
(vii) a second transform module which applies the second transformation to a plurality of corner point locations of the reference picture to produce a plurality of expected corner point locations of the de-warped representation of the document,
(viii) a third transform module which applies the inverse of the first transformation to the plurality of expected corner point locations of the de-warped representation of the document to produce a plurality of actual corner point locations of the document in the captured image, and
(ix) an extraction module which uses the plurality of actual corner point locations of the document in the captured image to extract a picture of the document from the captured image.

14. A system according to claim 13 in which the image capture device and the modules of the system are located in one machine.

15. A system according to claim 13 in which the image capture device and the modules of the system are distributed across one or more machines.
